# EUROPEAN PATENT APPLICATION

(11) **EP 1 689 199 A1**
(43) Date of publication of application: **09.08.2006**
(21) Application number: 06002484.1
(22) Date of filing: 07.02.2006
(51) Int. Cl.: H04Q 7/32

(54) **SIM card sharing method in a mobile station**

(30) Priority: 07.02.2005 KR 2005011249
(71) Applicant: Samsung Electronics Co., Ltd., Suwon-si, Gyeonggi-Do (KR)
(72) Inventor: Han, Jay, Yeongtong-gu, Suwon-si, Gyeonggi-do (KR)
(74) Representative: Grünecker, Kinkeldey, Stockmair & Schwanhäusser Anwaltssozietät

(57) **Abstract**

A subscriber identity module (SIM) card sharing method for a mobile station. In a state where a SIM card sharing mode is set in two different MSs connected to each other via local area communication, if a first MS transmits a SIM card using request message to a second MS via the local area communication, the second MS releases session with its built-in SIM card in response to a SIM card lending permission input from a user and allows the first MS to establish session with a SIM card built in the second MS via the local area communication and perform mobile communication using the SIM card built in the second MS. Accordingly, a SIM card can be shared between different MSs without physically moving the SIM card. In addition, a SIM card can be shared between different MSs without a SIM card sharing device.

## Description

The present invention relates generally to a mobile station, and in particular, to a subscriber identity module (SIM) card sharing method for a mobile station.

A subscriber identity module (SIM) card is a kind of smart card used to store subscriber authentication information, communication encryption information, and various other kinds of subscriber information. In general, a mobile equipment configures a mobile station (MS) by being combined with the SIM card. The MS can access a mobile communication network using the subscriber authentication information and the communication encryption information stored in the SIM card, perform communication, and inquire and use the subscriber information stored in the SIM card, such as a phone book or short messages.

Since an authentication and communication encryption function and a function of storing various kinds of information are separated using the SIM card, one SIM card can be inserted and used in a plurality of MSs, and a plurality of SIM cards can be switched and used in one MS. According to this feature, there exist a plurality of methods of sharing a SIM card among different MSs. For example, a SIM card can be shared by switching the SIM card inserted in an MS A into an MS B and shared by exchanging SIM card information between MSs using a local area communication scheme built in the MSs, such as Bluetooth or Infrared Data Association (IrDA). In addition, a SIM card can be shared using a SIM card sharing device.

However, MSs sharing a SIM card using the methods described above have following problems. Switching a SIM card inserted in the MS A into the MS B makes it inconvenient for a subscriber to share the SIM card, since the SIM card must be physically pulled out from the MS A and inserted into the MS B, . For sharing SIM card information between subscribers using Bluetooth or IrDA, it is inconvenient for a sender to select and transmit various kinds of information stored in the SIM card one by one. In addition, if a SIM card is not inserted in an MS, the use of the MS is limited. In particular, to transmit information in an MS to a SIM card, the SIM card must be inserted in the MS.

An object of the present invention is to substantially solve at least the above problems and/or disadvantages and to provide at least the advantages below. Accordingly, the object of the present invention is to provide a method of sharing a subscriber identity module (SIM) card between different mobile stations (MSs) without physically moving the SIM card.

This object is solved by the subject matter of the independent claims.

Preferred embodiments are defined in the dependent claims.

An aspect of the present invention is to provide a method of sharing a SIM card between different MSs without a SIM card sharing device.

A further aspect of the present invention is to provide a method of conveniently sharing a SIM card between different MSs.

According to one aspect of the present invention, there is provided a subscriber identity module (SIM) card sharing method in different mobile stations (MSs), each MS including a SIM card. The method includes requesting, by a first MS, a second MS connected via local area communication for using a SIM card built in the second MS; allowing, by the second MS, the first MS to use the SIM card built in the second MS if the second MS receives an input of permitting the lending of the SIM card built in the second MS; and releasing, by the first MS, a session established with a SIM card built in the first MS and establishing a session with the SIM card built in the second MS via the local area communication.

According to another aspect of the present invention, there is provided a subscriber identity module (SIM) card sharing method in different mobile stations (MSs) including a plurality of SIM cards. The method includes transmitting, by a first MS, a SIM card using request message to a second MS connected via local area communication; selecting, by the second MS, a sharing MS among the plurality of SIM cards built in the second MS if the second MS receives an input for permission of the use of the SIM card built in the second MS, releasing an established session if the session has been established with the second MS, and transmitting a SIM card using permission message to the first MS; and releasing, by the first MS, a session established with a SIM card built in the first MS and establishing a session with the sharing SIM card built in the second MS via the local area communication.

The above and other objects, features and advantages of the present invention will become more apparent from the following detailed description when taken in conjunction with the accompanying drawings in which:
FIG 1 is a schematic configuration of a mobile communication system to which the present invention is applied;
FIG. 2 is a block diagram of an MS according to a first preferred embodiment of the present invention;
FIG. 3 is a signaling diagram illustrating a message flow between MSs according to the first preferred embodiment of the present invention;
FIG 4 is a signaling diagram illustrating a message flow between MSs according to another embodiment of the first preferred embodiment of the present invention;
FIG. 5 is a block diagram of an MS according to a second preferred embodiment of the present invention; and
FIGs. 6A and 6B are flowcharts illustrating an operation of the MS according to the second preferred embodiment of the present invention.

Preferred embodiments of the present invention will be described below with reference to the accompanying drawings. In the drawings, the same or similar elements are denoted by the same reference numerals even though they are depicted in different drawings. In the following description, well-known functions or constructions are not described in detail since they would obscure the invention in unnecessary detail.

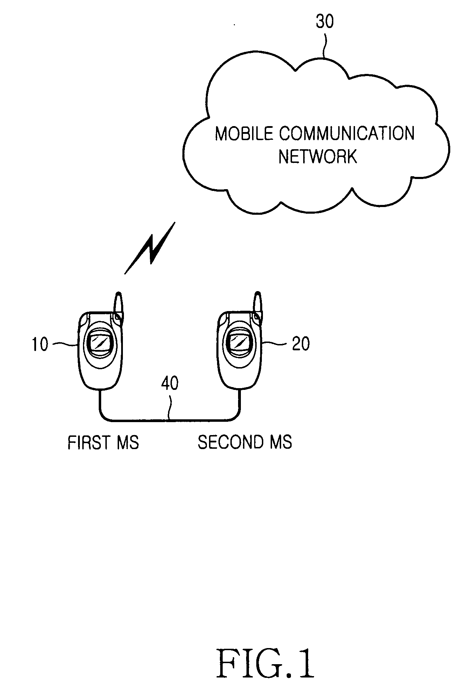

A configuration of a mobile communication system to which the present invention is applied will now be described with reference to FIG. 1, which is a schematic configuration of a mobile communication system to which the present invention is applied. In the present invention, different mobile stations (MSs), which can perform mobile communication and local area communication, share built-in subscriber identity module (SIM) cards with each other. As shown in FIG. 1, the mobile communication system includes a mobile communication network 30, a first MS 10, and a second MS 20. According to the present invention, each of the first MS 10 and the second MS 20 can perform mobile communication by linking to the mobile communication network 30, and the first MS 10 and the second MS 20 can directly communicate with each other via local area communication, rather than the mobile communication. In the present invention, local area communication includes all communication other than communication via the mobile communication network 30. Examples of the local area communication are IrDA, Bluetooth, Universal Serial Bus (USB), and Wireless Local Area Network (WLAN). In FIG 1, according to a preferred embodiment of the present invention, direct communication between the first MS 10 and the second MS 20 via USB data cable 40 is illustrated.

For convenience of description, hereinafter, it is assumed that the first MS 10 is an MS requesting the second MS 20 for the use of a SIM card built in the second MS 20 and the second MS 20 is an MS providing its built-in SIM card to the first MS 10 in response to a SIM card using request of the first MS 10. In reality, an MS to which the present invention is applied can be an MS requesting the use of a SIM card and an MS providing its built-in SIM card to another MS requesting for the use of the built-in SIM card in response to a SIM card using request. Embodiments of the present invention include a first preferred embodiment in which each of MSs according to the present invention includes one SIM card and a second preferred embodiment in which an MS providing its built-in SIM card to another MS includes two SIM cards.

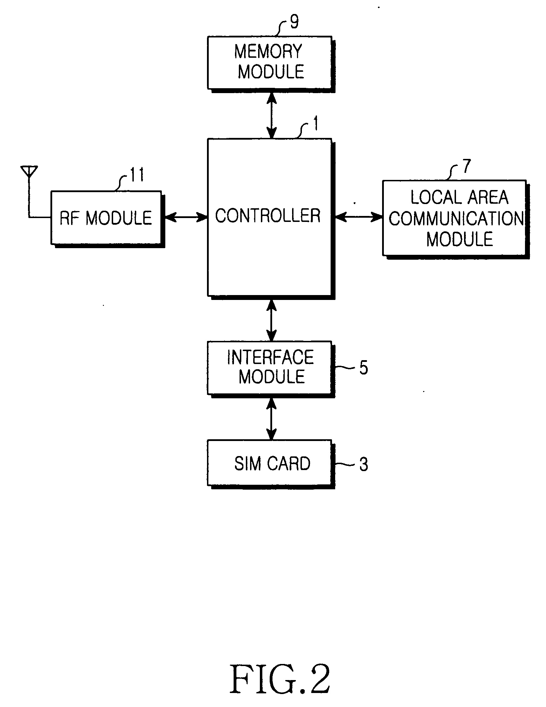

A configuration of an MS including one SIM card according to the first preferred embodiment will now be described with reference to FIG. 2, which is a block diagram of an MS according to the first preferred embodiment of the present invention. Referring to FIG. 2, the MS includes a controller 1 which controls and manages a general operation of the MS, a SIM card 3, an interface module 5, a local area communication module 7, a memory module 9, and a radio frequency (RF) module 11.

The SIM card 3 stores subscriber authentication information, communication encryption information, and various other kinds of subscriber information. When session is established between the controller 1 and the SIM card 3, the controller 1 performs mobile communication using the information stored in the SIM card 3.

The interface module 5 is a device connecting the controller 1 and the SIM card 3. Via the interface module 5, the controller 1 releases the session established with the SIM card 3, stores information in the SIM card 3, and reads information stored in the SIM card 3.

The local area communication module 7 is a module not performing communication via a mobile communication network but making direct local area communication with another MS (e.g., an IrAD communication module, a Bluetooth communication module, a USB communication module, WLAN communication module).

The memory module 9 stores programs for processing and controlling the controller 1, reference data, and various kinds of updatable storage data and is provided as a working memory of the controller 1. The memory module 9 stores program data for a SIM card sharing mode according to the present invention. The SIM card sharing mode is a mode in which mobile communication is not performed using the SIM card 3 but a SIM card built in another MS. When the SIM card sharing mode is set, and where the local area communication with the other MS via the local area communication module 7 is set, the controller 1 establishes a session with the SIM card built in the other MS and performs mobile communication using the SIM card built in the other MS.

The RF module 11 transmits and receives RF signals to and from a base station via an antenna and includes a baseband processing unit. The baseband providing unit transmits a modulated RF signal via the antenna by modulating a transmission signal received from the controller 1 and provides a reception signal to the controller 1 by demodulating an RF signal received via the antenna.

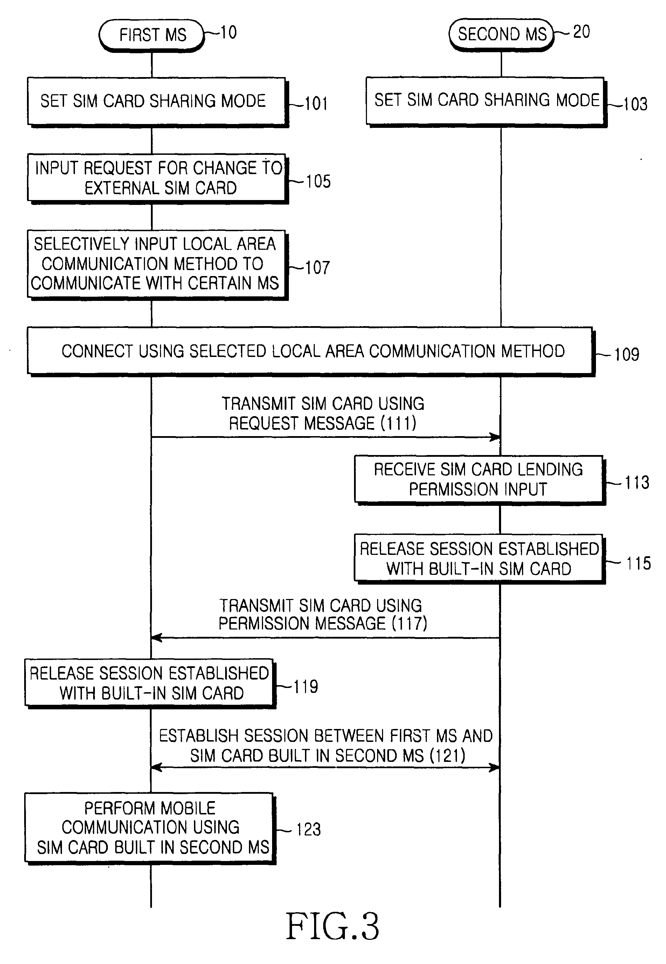

A process of sharing a SIM card in the first MS 10 and the second MS 20, each configured as described above, according to a preferred embodiment of the present invention is as follows. In a state where the SIM card sharing mode is set in both the first MS 10 and the second MS 20, if a user inputs an external SIM card using request, the first MS 10 checks whether it is connected to the second MS 20 via the local area communication. If the local area communication is not connected, the first MS 10 performs an operation for connecting the local area communication to the second MS 20. The first MS 10 transmits a SIM card sharing request message to the second MS 20, and in response to the SIM card sharing request, if the second MS 20 receives an input of accepting the SIM card sharing request from a user, the second MS 20 releases the session with its built-in SIM card and transmits a SIM card using permission message to the first MS 10. The first MS 10, which has received the SIM card using permission message, releases the session with its built-in SIM card, establishes a session with the SIM card built in the second MS 20, and performs mobile communication using the SIM card built in the second MS 20. The above process is illustrated in FIG. 3.

FIG. 3 is a signaling diagram illustrating a message flow between the MSs 10 and 20 according to the first preferred embodiment of the present invention. Referring to FIG. 3, in step 101, the first MS 10 sets the SIM card sharing mode according to a user input and goes to step 105. In step 103, the second MS 20 sets the SIM card sharing mode according to a user input and waits. In step 105, if the first MS 10 receives an external SIM card using request from a user, MS 10 goes to step 107. In step 107, the first MS 10 receives an input for selecting a local area communication method to be used to connect with a certain MS, i.e., the second MS 20.

In step 109, the first MS 10 connects communication with the second MS 20 using the selected local area communication method. That is, in steps 107 and 109, the first MS 10 displays supportable local area communication methods and receives a selection input from the user. The supportable local area communication method depends on the local area communication module included in the first MS 10 and can be, for instance, IrAD, Bluetooth, USB, and WLAN communication methods.

If the user selects the USB communication method, the first MS 10 checks whether it is connected to the second MS 20 via USB data cable. If the IrAD communication method is selected, the first MS 10 activates IrAD communication and senses whether the partnering MS can perform the IrAD communication (i.e., the second MS 20, within the communicatable distance). If the Bluetooth communication method is selected, the first MS 10 activates Bluetooth communication, provides a list of a plurality of MSs that can perform the Bluetooth communication to the user, and selects an MS with which to share a SIM card (i.e., the second MS 20, by receiving a selection input from the user). If the WLAN communication method is selected, the first MS 10 activates WLAN communication, provides a list of a plurality of MSs that can perform the WLAN communication to the user, and selects an MS with which to share a SIM card (i.e., the second MS 20, by receiving a selection input from the user). In the present embodiment, the local area communication is connected between the first MS 10 and the second MS 20 via the USB data cable as illustrated in FIG. 1.

Referring back to FIG. 3, after the local area communication is connected between the first MS 10 and the second MS 20 in step 109, the first MS 10 transmits a SIM card sharing request message to the second MS 20 in step 111. In step 113, the second MS 20, which has received the SIM card sharing request, receives a SIM card lending permission input from a user. In step 115, the second MS 20 releases the session established with its built-in SIM card in response to the SIM card lending permission input. In other words, the session established between a controller of the second MS 20 and its built-in SIM card is released. In step 117, the second MS 20 transmits a SIM card using permission message to the first MS 10 via the local area communication. If the second MS 20 is in a state where a session with its built-in SIM card is not established, the second MS 20 transmits the SIM card using permission message to the first MS 10 via the local area communication as soon as the second MS 20 receives the SIM card lending permission input from the user. In step 119, the first MS 10, which has received the SIM card using permission message, releases a session with its built-in SIM card. That is, a session established between a controller of the first MS 10 and its built-in SIM card is released. In step 121, the first MS 10 establishes a session with the SIM card built in the second MS 20 via the local area communication.

Herein, the controller of the MS 20 performs an operation as a SIM card reader and makes possible data transmission/reception between the SIM card built in the second MS 20 and the first MS 10 via the local area communication. Accordingly, a session is established between the controller of the first MS 10 and the SIM card built in the second MS 20. In step 123, the first MS 10 performs mobile communication by performing mobile communication network authentication and an encryption process using the SIM card built in the second MS 20. During the mobile communication, the connection of the local area communication should be continuously maintained.

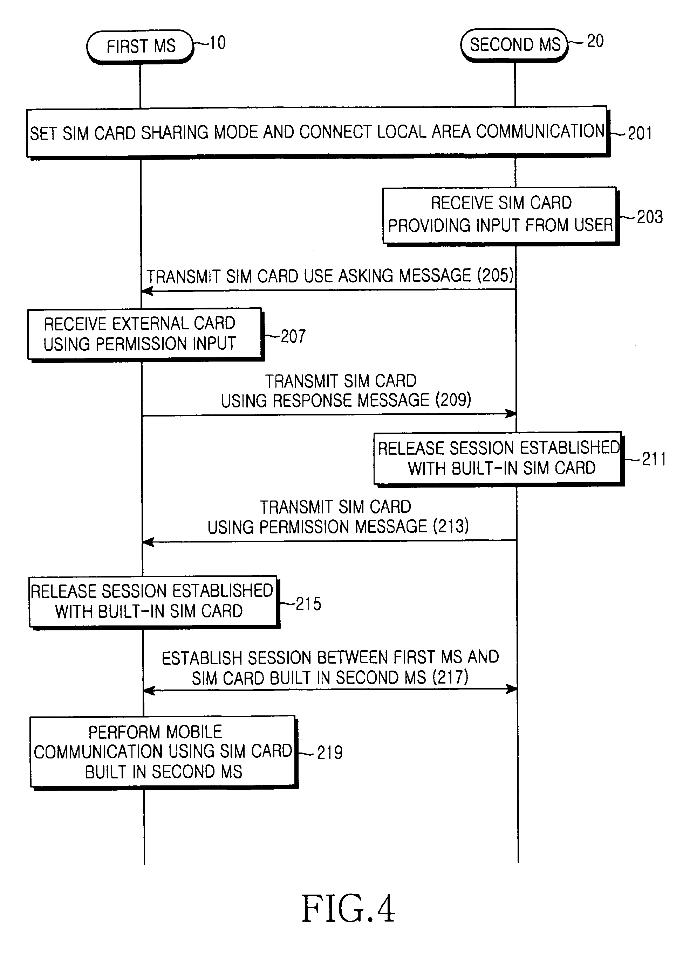

An embodiment in which the first MS 10 using a SIM card built in another MS requests the second MS 20 to provide its built-in SIM card for the use has been described. A configuration in which the second MS 20 asks the first MS 10 whether the first MS 10 uses the SIM card built in the second MS 20 before the first MS 10 requests the second MS 20 for the use of the SIM card built in the second MS 20 is also possible. This configuration is illustrated in FIG 4.

FIG. 4 is a signaling diagram illustrating a message flow between the MSs 10 and 20 according to the first embodiment of the present invention. Referring to FIG. 4, in step 201, the SIM card sharing mode is set in the first MS 10 and the second MS 20, and the local area communication is connected between the first MS 10 and the second MS 20. In step 203, the second MS 20 receives a SIM card providing input from a user. In step 205, the second MS 20 transmits a SIM card use asking message to the first MS 10 via the connected local area communication. In step 207, the first MS 10, which has received the SIM card use asking message, receives an external SIM card using permission input from a user. In step 209, the first MS 10 transmits a SIM card use response message to the second MS 20. In step 211, the second MS 20, which has received the SIM card use response message, releases the session established with its built-in SIM card. In step 213, the second MS 20 transmits a SIM card using permission message to the first MS 10. In step 215, the first MS 10, which has received the SIM card using permission message, releases the session with its built-in SIM card. In step 217, the first MS 10 establishes a session with the SIM card built in the second MS 20 via the local area communication. In step 219, the first MS 10 performs mobile communication by performing mobile communication network authentication and an encryption process using the SIM card built in the second MS 20. During the mobile communication, the connection of the local area communication should be continuously maintained.

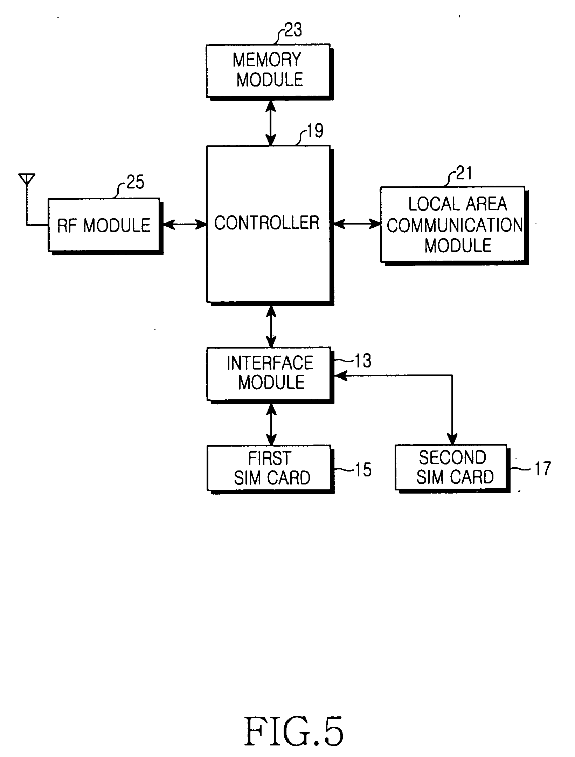

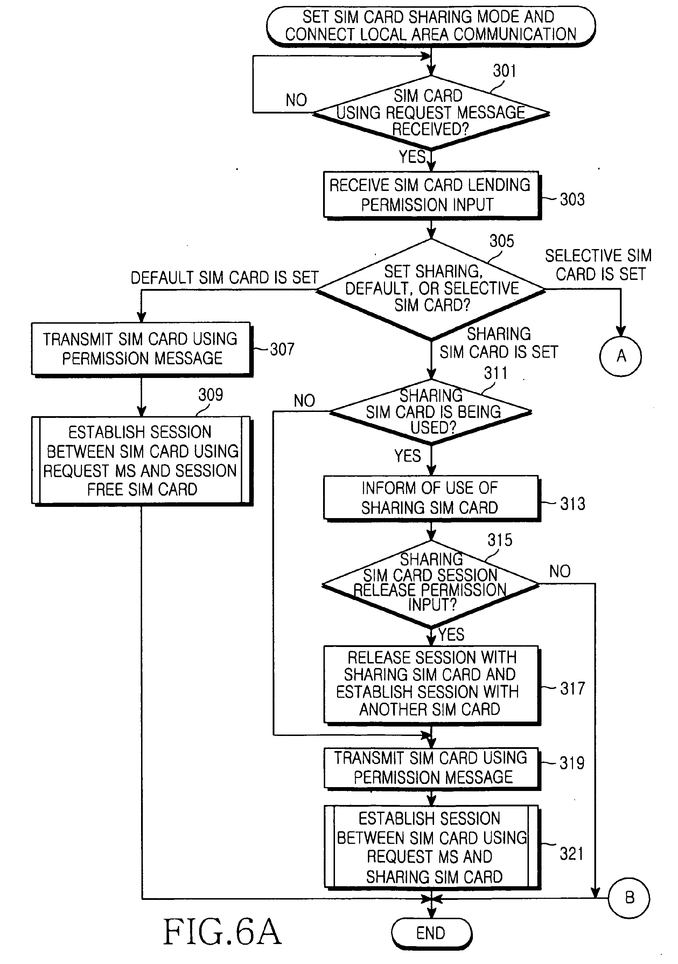

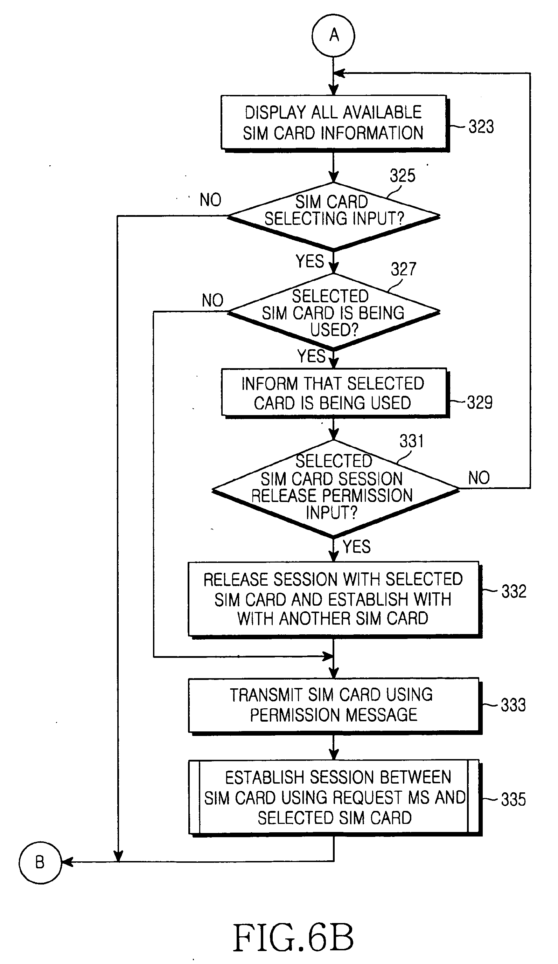

In the above embodiments, configurations in which the second MS 20 providing its built-in SIM card to another MS has only one built-in SIM card have been described. The second preferred embodiment of the present invention will now be described with reference to FIGs. 5 and 6. In the first preferred embodiment, since the second MS 20 (i.e., an MS providing its built-in SIM card to another MS) has only one SIM card, if the SIM card using permission input is received from the user when the SIM card using request message is received from the other MS (i.e., the first MS 10), the MS providing its built-in SIM card to another MS provides the one and only built-in SIM card to the other MS and operates as only a SIM card reader. However, if the MS providing its built-in SIM card to another MS provides has two SIM cards as illustrated in the second preferred embodiment, the MS providing its built-in SIM card to another MS can be configured to selectively provide one of the two SIM cards to the other MS and maintain a session with the remaining SIM card.

FIG. 5 is a block diagram of the second MS 20 according to the second embodiment of the present invention. An MS providing its built-in SIM card to another MS (i.e., the second MS 20) according to the second preferred embodiment of the present invention includes a first SIM card 15, a second SIM card 17, an interface module 13, a controller 19, a local area communication module 21, a memory module 23, and an RF module 25 as illustrated in FIG. 5.

The second MS 20 selectively provides a built-in SIM card according to the second preferred embodiment of the present invention in response to a request for the use of the built-in SIM card received from another MS. There are three ways to set a sharing SIM card of the second MS 20. First, a default SIM card is set. That is, a SIM card that the second MS 20 does not use at the moment is set as the sharing SIM card. Second, one of the two SIM cards is fixedly set as the sharing SIM card. Third, a user selects one of the two SIM cards.

An operation of the second MS 20 according to the three setting ways is illustrated in FIGs. 6A and 6B, which are flowcharts illustrating an operation of the second MS 20 according to the second embodiment of the present invention.

Referring to FIGs. 6A and 6B, an operation is illustrated where the SIM card sharing mode is set in the controller 19 of the second MS 20 and the second MS 20 is connected to an MS requesting the use of a SIM card built in the second MS 20 (i.e., the first MS 10) via the local area communication. If the second MS 20 receives a SIM card using request message from the first MS 10 in step 301, the operation proceeds to step 303.

In step 303, the controller 19 receives a SIM card lending permission input from the user. In step 305, the controller 19 determines whether the sharing SIM card, default SIM card, or selective SIM card is set. If the default SIM card is set, the process proceeds to step 307; if the sharing SIM card is set, the process proceeds to step 311; and if the selective SIM card is set, the process proceeds to A (step 323 of FIG 6B).

In step 307, the controller 19 transmits a SIM card using permission message to the first MS 10. The first MS 10, which has received the SIM card using permission message, releases the session with its built-in SIM card and establishes a session with the SIM card built in the second MS 20. In step 309, the controller 19 operates to establish a session between the default SIM card in a session free state and the first MS 10 and finishes the process. Accordingly, the first MS 10 performs mobile communication by performing mobile communication network authentication and an encryption process using the SIM card built in the second MS 20. During the mobile communication, the connection of the local area communication should be continuously maintained.

In step 311, the controller 19 determines whether the sharing SIM card is being used since the sharing SIM card is set. If the sharing SIM card is being used, the process proceeds to step 313, and if the sharing SIM card is not used, the process proceeds to step 319. In step 313, the controller 19 informs the user that the sharing SIM card is being used at the moment. In step 315, the controller 19 determines whether an input of permitting a session release of the sharing SIM card currently being used is received from the user. If the input of permitting a session release of the sharing SIM card is received, the process proceeds to step 317, and if the input of permitting a session release of the sharing SIM card is not received, the controller 19 finishes the process. In step 317, the controller 19 releases session with the sharing SIM card and establishes a session with the remaining SIM card. In step 319, the controller 19 transmits a SIM card using permission message to the first MS 10. The first MS 10, which has received the SIM card using permission message, releases the session with its built-in SIM card and establishes a session with the SIM card built in the second MS 20. In step 321, the controller 19 operates to establish a session between the first MS 10 and the sharing SIM card and finishes the process. Accordingly, the first MS 10 performs mobile communication by performing mobile communication network authentication and an encryption process using the SIM card built in the second MS 20. During the mobile communication, the connection of the local area communication should be continuously maintained.

In step 323, the controller 19 displays all available SIM card information since the selective SIM card is set. If the controller 19 receives an input of selecting a certain SIM card from the user in step 325, then in step 327 the controller 19 determines whether the selected SIM card is being used at the moment. If the selected SIM card is being used, the process proceeds to step 329, and if the selected SIM card is not used, the process proceeds to step 333. In step 329, the controller 19 informs the user that the selected SIM card is being used at the moment. In step 331, the controller 19 determines whether an input of permitting a session release of the selected SIM card currently being used is received from the user. If the input of permitting a session release of the selected SIM card is received, the process proceeds to step 332, and if the input of permitting a session release of the sharing SIM card is not received, the process proceeds to step 323.

In step 332, the controller 19 releases the session with the selected SIM card and establishes a session with the remaining SIM card. In step 333, the controller 19 transmits a SIM card using permission message to the first MS 10. The first MS 10, which has received the SIM card using permission message, releases the session with its built-in SIM card and establishes a session with the SIM card built in the second MS 20. In step 335, the controller 19 operates to establish session between the first MS 10 and the sharing SIM card and finishes the process by proceeding to B. Accordingly, the first MS 10 performs mobile communication by performing mobile communication network authentication and an encryption process using the SIM card built in the second MS 20. During the mobile communication, the connection of the local area communication is continuously maintained.

While the second MS 20 is configured to lend an arbitrary built-in SIM card to another MS and establish session with the remaining built-in SIM card in the embodiment illustrated in FIGs. 6A and 6B, the second MS 20 can be configured not to establish session with the remaining built-in SIM card while a built-in SIM card is being provided to another MS according to user's setting.

While detailed embodiments have been described above, it will be understood by those skilled in the art that various changes in form and details may be made therein without departing from the scope of the present invention. For example, the first MS 10 and the second MS 20 can always be connected to each other via the local area communication and the first MS 10 automatically uses a built-in SIM card of the second MS 20 when the two MSs 10 and 20 are turned on. In this arrangement, when the first MS 10 is turned on from a power-off state, the first MS 10 checks a state of the local area communication between the two MSs 10 and 20 according to a power-on state of the second MS 20 and transmits a SIM card using request message to the second MS 20 without establishing a session with its built-in SIM card. In response to the SIM card using request message, the second MS 20 releases the session established with its built-in SIM card and transmits a SIM card using permission message to the first MS 10. The first MS 10, which has received the SIM card using permission message, establishes a session with the built-in SIM card of the second MS 20 via the local area communication. As another example, the second embodiment can be expanded to a case where the second MS 20 has more than two SIM cards.

As described above, according to embodiments of the present invention, in a state where a SIM card sharing mode is set in two different MSs connected to each other via local area communication, if a first MS transmits a SIM card using request message to a second MS via the local area communication, the second MS releases its session with its built-in SIM card in response to a SIM card lending permission input from a user and allows the first MS to establish session with a SIM card built in the second MS via the local area communication and perform mobile communication using the SIM card built in the second MS. Accordingly, a SIM card can be shared between different MSs without physically moving the SIM card. In addition, a SIM card can be shared between different MSs without a SIM card sharing device.

## Claims

1. A SIM card sharing method in different MSs, each MS including a SIM card, the method comprising:
requesting, by a first MS of a second MS connected via local area communication, use of a SIM card built in the second MS;
allowing, by the second MS, the first MS to use the SIM card built in the second MS if the second MS receives an input permitting the lending of the SIM card built in the second MS; and
releasing, by the first MS, a session established with a SIM card built in the first MS and establishing a session with the SIM card built in the second MS via the local area communication.

2. The method of claim 1, wherein the step of allowing the first MS to use the SIM card built in the second MS comprises:
if the second MS receives the SIM card lending permission input, determining whether a session is established with the SIM card built in the second MS;
if the session is not established with the SIM card built in the second MS, transmitting a SIM card use permission message to the first MS; and
if the session is established with the SIM card built in the second MS, releasing the established session and transmitting the SIM card use permission message to the first MS.

3. The method of claim 1 or 2, further comprising:
performing, by the first MS, mobile communication using the SIM card built in the second MS.

4. The method of one of claims 1 to 3, wherein the local area communication is USB communication.

5. The method of one of claims 1 to 3, wherein the local area communication is Bluetooth communication.

6. The method of one of claims 1 to 3, wherein the local area communication is IrDA communication.

7. The method of one of claims 1 to 3, wherein the local area communication is WLAN communication.

8. A SIM card sharing method in different MSs, each MS including a SIM card, the method comprising:
transmitting, by a first MS, a SIM card use request message to another MS connected via local area communication; and
if a SIM card use permission message is received, the first MS releasing a session established with its own built-in SIM card and establishing a session via the local area communication with a built-in SIM card of the other MS connected via the local area communication.

9. A SIM card sharing method in different MSs, each MS including a SIM card, the method comprising:
receiving, by a first MS, a SIM card use request message from another MS connected via local area communication;
if a SIM card lending permission input is received, the first MS releasing a session established with its own built-in SIM card and transmitting a SIM card using permission message to the other MS connected via the local area communication; and
allowing the other MS connected via the local area communication to establish a session with the built-in SIM card by transmitting, via the local area communication, built-in SIM card information to the other MS connected via the local area communication.

10. A SIM card sharing method in different MSs including a plurality of SIM cards, the method comprising:
transmitting, by a first MS, a SIM card use request message to a second MS connected via local area communication;
selecting, by the second MS, a sharing SIM card among the plurality of SIM cards built in the second MS if the second MS receives an input for permission of the use of the SIM card built in the second MS, releasing an established session if the session has been established with the second MS, and transmitting a SIM card use permission message to the first MS; and
releasing, by the first MS, a session established with a SIM card built in the first MS and establishing a session with the sharing SIM card built in the second MS via the local area communication.

11. The method of claim 10, wherein the sharing SIM card is one of SIM cards for which a session is not currently established.

12. The method of claim 10, wherein the sharing SIM card is determined by a user's selection.

13. A SIM card sharing method in different MSs, each MS including a SIM card, the method comprising:
transmitting, by a first MS, a message asking whether a SIM card built in the first MS is currently being used to a second MS connected via local area communication;
transmitting, by the second MS, a message requesting the use of the SIM card built in the first MS to the first MS;
releasing, by the first MS, a session established with the SIM card built in the first MS and transmitting a SIM card use permission message to the second MS; and
releasing, by the second MS, a session established with a SIM card built in the second MS, establishing a session with the SIM card built in the first MS via the local area communication, and performing mobile communication using the SIM card built in the first MS.
